Europäisches Patentamt

European Patent Office

Office européen des brevets

(19)

(11) Publication number: **0 468 815 B1**

# EUROPEAN PATENT SPECIFICATION

(45) Date of publication of patent specification: **27.09.95**   (51) Int. Cl.⁶: **B60C 11/11**

(21) Application number: **91306861.5**

(22) Date of filing: **26.07.91**

(54) **Pneumatic tires.**

(30) Priority: **27.07.90 JP 197813/90**
**30.07.90 JP 199109/90**

(43) Date of publication of application:
**29.01.92 Bulletin  92/05**

(45) Publication of the grant of the patent:
**27.09.95 Bulletin  95/39**

(84) Designated Contracting States:
**CH DE FR GB LI LU SE**

(56) References cited:
**GB-A- 1 278 538**
**US-A- 4 217 942**
**US-A- 4 649 975**
**US-A- 4 815 512**

(73) Proprietor: **Bridgestone Corporation**
**1-1, Kyobashi 1-Chome**
**Chuo-Ku**
**Tokyo 104 (JP)**

(72) Inventor: **Ichiki, Yasufumi**
**5-5, Ogawahigashi-Cho 3-Chome**
**Kodaira City,**
**Tokyo (JP)**
Inventor: **Ikeda, Hiromichi**
**22-14, Hamadayama 1-Chome**
**Suginami-Ku,**
**Tokyo (JP)**

(74) Representative: **Whalley, Kevin et al**
**MARKS & CLERK,**
**57-60 Lincoln's Inn Fields**
**London WC2A 3LS (GB)**

## Description

This invention relates to pneumatic tires having a block pattern for improving service running life while maintaining running performances on snow and ice roads and non-paved roads.

In such a tire wherein a plurality of block rows each comprising a plurality of blocks separated from each other in the circumferential direction of the tire are separated from each other in the widthwise direction of the tire at the tread portion thereof, that is a tire having a so-called block pattern, the traction force and braking force are excellent, so that this tire is preferably used in running on ice and snow roads and non-paved roads. Moreover, in order to more improve the running performances on such road surfaces, it has been known that the shape and size of the block itself are made small to increase the number of blocks and a sipe is formed in the block to increase an edge component of the block and advantageously increase the gripping force against the road surface.

However, when the shape and size of each block are made small, the rigidity of the block becomes necessarily small, so that the deformation of the block in the circumferential direction of the tire during the traction and braking becomes large and hence uneven wear is apt to be caused. Furthermore, when these blocks are repeatedly subjected to compression deformation, cracks are created at the bottom of the groove defining the block and/or the bottom of the sipe and further block chipping and the like are caused to decrease the tire life.

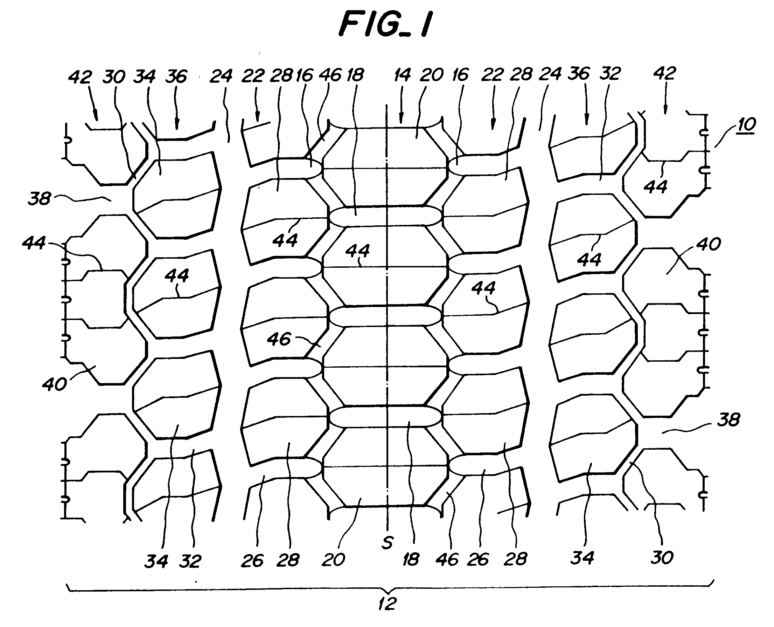

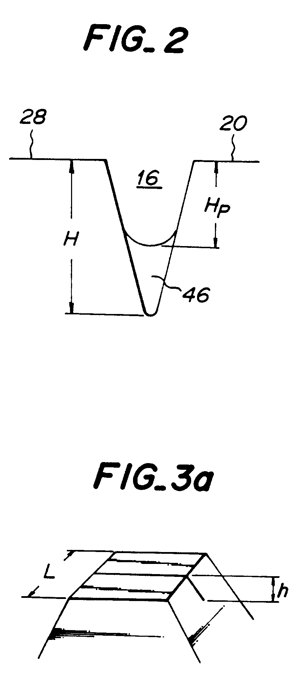

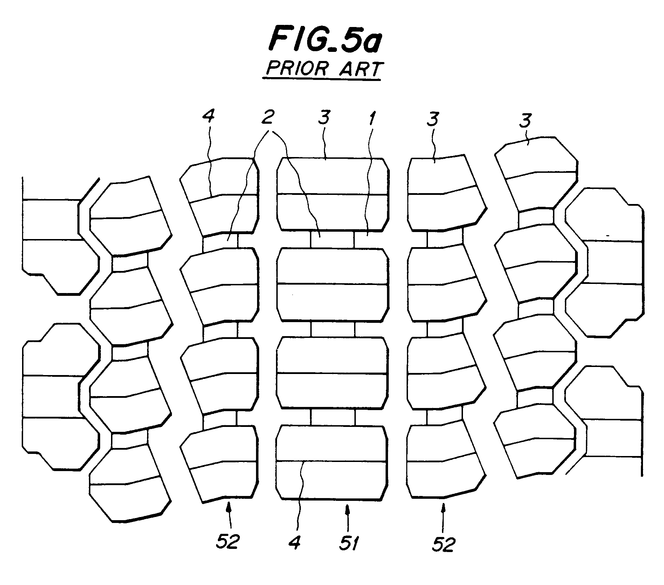

These problems are conspicuous in heavy duty pneumatic tires applicable for buses and trucks having a relatively high ground contacting pressure. In the conventional technique, therefore, there has been employed a method wherein the shape and size of the block are made large to increase the rigidity for maintaining the tire life even if the running performances on ice and snow roads are sacrificed. Furthermore, there have been employed a method in which the depth of the lateral groove defining the block is made shallower as a whole, and a method in which, as shown in Fig. 5a of the accompanying drawings, a lateral groove 1 defining blocks 3 in the tire having plural block rows separated from each other in the widthwise direction of the tire at the tread portion thereof is provided with a portion having a depth shallower than that of the lateral groove or a so-called platform 2 to increase the rigidity thereof, whereby the motion of the block 3 in the circumferential direction of the tire is restrained. A block pattern similar to that of Fig. 5a of the accompanying drawings is shown in Figs. 1 and 2 of JP-A-63,90406. Moreover, a sipe 4 is arranged in each block dividing the block in the circumferential direction of the tire.

However, when the depth of the lateral groove is made shallow as a whole for obtaining sufficient rigidity of the block, this groove is apt to be clogged with snow and hence the performances on snow roads are degraded. On the other hand, when the platform 2 is formed in a part of the lateral groove 1 so as to have a depth shallower than that of the lateral groove as shown in Fig. 5a, clogging with snow hardly occurs as compared with the case that the depth of the lateral groove is merely made shallower, so that the performances on snow are improved. However, when the deformation resulting from the motion of the block in the circumferential direction of the tire is repeatedly caused in the traction and braking of the tire, strain concentrates in the top of the platform, whereby cracking is apt to be caused in the platform to reduce the tire life.

The present invention aims to provide a pneumatic tire capable of improving the tire life by controlling the cracking at the bottom of the sipe without damaging the running performances on ice and snow roads and non-paved roads.

The present invention provides a pneumatic tire having a block pattern in which at least three block rows each comprised of a plurality of blocks separated from each other in the circumferential direction of the tire are arranged in a tread portion of the tire so as to be separate from each other in the widthwise direction of the tire, characterized in that said blocks of the mutually adjoining block rows are shifted in the circumferential direction of the tire, and each of these blocks is divided by at least one sipe, and a block portion of each block in a central block row among these block rows divided by a sipe is connected to a block portion of each block in the adjoining block row through a platform arranged in a groove separating these block rows from each other in the widthwise direction of the tire, provided that the depth of the platform is shallower than the depth of the groove.

In a preferred embodiment of the invention, the platform satisfies the following relation:

$$0.45Ho \leqq Hp \leqq 0.75Ho$$

wherein Ho is the depth of a groove separating the block rows from each other in the widthwise direction of the tire and having no platform, and Hp is the depth of the platform, and also the sipe satisfies the following relation:

2

$$2.1h \leq L \leq 3.0h$$

wherein h is the depth of the sipe and L is the length of the block in the circumferential direction of the tire.

According to a preferred embodiment of the invention, each block in all of said block rows is divided by at least one sipe substantially extending in the widthwise direction of the tire and having an enlarged bottom portion, and said block has a length L (mm) in the circumferential direction of the tire satisfying $10.5 \leq L \leq 45$, and said sipe has a depth h (mm) of $5 \leq h \leq 15$ and satisfies the following relations:

$$d/h \geq 1.0 \text{ and } s \geq 1.2$$

wherein d is the shortest distance (mm) among a distance between an edge of the block extending in the widthwise direction of the tire and a sipe adjacent to such an edge and a distance between the mutually adjoining sipes and s is the length (mm) of the enlarged bottom portion of the sipe in the circumferential direction of the tire.

The invention will be further described by way of example only, with reference to the accompanying drawings, wherein:

Fig. 1 is a schematic view of a first embodiment of a tread pattern in a pneumatic tire according to the invention;

Fig. 2 is a schematic view in the vicinity of a platform in the tire of Fig. 1;

Fig. 3a is a perspective view of a block in the tread pattern of a tire according to the invention;

Figs. 3b and 3c are graphs showing relations of the ratio of circumferential length of block to depth of sipe against cracking length in sipe and traction performance on snow road, respectively;

Fig. 4 is a schematic view of a second embodiment of a tread pattern in a pneumatic tire according to the invention;

Figs. 5a and 5b are schematic views of tread patterns in a conventional tire and a reference tire, respectively;

Fig. 6 is a perspective view of another embodiment of a block of a tire according to the invention;

Fig. 7 is a graph showing a relation between the length of a block in the circumferential direction of a tire and the traction performance on snow road;

Fig. 8 is a graph showing a relation between the ratio of minimum circumferential length of a block portion divided by a sipe to depth of sipe and the tire life (running distance until occurrence of initial cracking);

Fig. 9 is a graph showing a relation between the length of an enlarged portion at the bottom of a sipe in the circumferential direction of the tire and the tire life;

Figs. 10 and 11 are schematic views of other embodiments of tread patterns in pneumatic tires according to the invention; and

Fig. 12 is a schematic view of a tread pattern in a comparative tire.

According to the invention, the blocks of the adjoining block rows separated from each other in the widthwise direction of the tire are shifted in the circumferential direction of the tire, so that the timing of the block stepped-in and kicked-out against road surface is different between the mutually adjoining block rows and hence the opening degree of the sipe in each block is made small and the occurrence and progress of the cracking at the bottom of the sipe can be suppressed.

Furthermore, the platform arranged in the groove separating the block rows from each other in the widthwise direction of the tire serves to connect the block in the central block row to two respective blocks in the adjoining block row. In other words, the motion of the one block in the central block row is controlled by blocks of each of the adjoining block rows arranged at both sides of the central block row in the widthwise direction of the tire, so that the block motion of the central block row can be made small as compared with the case that the blocks separated from each other in the circumferential direction are connected to each other through the platform arranged between these blocks.

In the platform of the tire according to the invention, therefore, the stress concentration in the top of the platform is mitigated as compared with the case that the platform arranged between the blocks is subjected to stretching in the circumferential direction of the tire during the running, whereby the occurrence of cracking in the platform can be controlled. Furthermore, the edge component of the block is increased by arranging the sipe in the block, so that good running performances on snow roads are obtained.

When the depth Ho of the groove separating the block rows in the widthwise direction of the tire and the depth Hp of the platform satisfy the relation of $0.45Ho \leq Hp \leq 0.75Ho$, the stress concentration in the platform due to the deformation of the block in the circumferential direction of the tire is reduced and the clogging of the platform with snow can be controlled, so that the performances on snow roads are not degraded.

Further, when the depth h of the sipe and the length L of the block in the circumferential direction of the tire satisfy the relation of $2.1h \leq L \leq 3.0h$, the rigidity of the block portion can be held at an appropriate value, so that the occurrence and growth of cracking at the bottom of the sipe and the platform can be controlled while maintaining the performances on snow roads.

Moreover, at least one sipe substantially extending in the widthwise direction of the tire is arranged in the block so as to have an adequate depth in connection with the length of the block in the circumferential direction of the tire, whereby the edge component in the block is increased to provide excellent running performances on ice and snow roads and non-paved roads. Also, the enlarged portion formed in the bottom of the sipe mitigates the stress produced at the bottom of the sipe through the opening and closing of the sipe resulting from the motion of the block in the circumferential direction of the tire during the running thereof, whereby the occurrence of the cracking is suppressed to improve the tire life.

In addition, the occurrence of cracking at the bottoms of the sipes can be further controlled by providing blocks provided with sipes having an enlarged bottom portion in the block pattern provided with platforms between the blocks.

In Fig. 1 is shown a first embodiment of a tread pattern in a pneumatic tire 10 according to the invention. Since a ground contacting portion 12 of the tire is subjected to a large deformation during the running, three block rows each comprised of a plurality of blocks separated from each other in the circumferential direction of the tire are arranged in a central region of the ground contacting portion 12 so as to be separate from each other in the widthwise direction of the tire.

A block row 14 located on an equatorial plane S of the tire consists of a plurality of blocks 20 having a flat octagonal shape which are defined by two circumferential grooves 16 separated from each other in the widthwise direction of the tire and extending zigzag in the circumferential direction of the tire, and lateral grooves 18 extending between these circumferential grooves in the widthwise direction of the tire and separated from each other in the circumferential direction of the tire. Further, each of the other block rows 22 sandwiching the block row 14 consists of a plurality of blocks 28 having a nonagonal shape which are defined by the respective circumferential groove 16, a circumferential main groove 24 arranged outward of the groove 16 in the widthwise direction of the tire and continuously extending in the circumferential direction of the tire, and lateral grooves 26 extending substantially in the widthwise direction and slightly slanting at the side of the main groove 24 and separated from each other in the circumferential direction of the tire. Moreover, the width of the circumferential main groove 24 is wider than that of the circumferential groove 16 to ensure the sufficient drainage property.

In this embodiment, the ground contacting portion located outside the circumferential main groove 24 in the widthwise direct on of the tire has a block row 36 consisting of a plurality of blocks 34 having a nonagonal shape which are defined by a circumferential groove 30 having a width narrower than that of the circumferential groove 16 and extending zigzag in the circumferential direction of the tire, the circumferential main groove 24 and lateral grooves 32 extending substantially in the widthwise direction of the tire and slightly slanting at the side of the circumferential main groove and separated from each other in the circumferential direction of the tire. In this case, the slant portion of the lateral groove 32 defining the block 34 has an inclination angle substantially equal to that of the lateral groove 26 defining the block 28. Furthermore, the blocks 28 of the block row 22 have a shape approximately the same as that of the blocks 34 of the block row 36 and also the tapered portions of the blocks 28 and 34 are arranged in the widthwise direction of the tire so as to oppose to each other. Moreover, a block row 42 consisting of a plurality of blocks 40, which are defined by the circumferential groove 30 and wider width lateral grooves 38 separated from each other in the circumferential direction of the tire and extending substantially in the widthwise direction of the tire, is arranged in a region of the ground contacting portion 12 located outward in the widthwise direction of the tire.

Each of the blocks in these block rows 14, 22, 36 and 42 is divided into two block portions in the circumferential direction of the tire by a sipe 44 extending substantially in the widthwise direction of the tire. Furthermore, the blocks constituting the block row 14 and the opposed block rows 22, 22 sandwiching the block row 14 are shifted from each other in the circumferential direction of the tire between the mutually adjoining block rows arranged in the widthwise direction of the tire to form a so-called point-symmetrical block pattern. Specifically, each block 20 in the block row 14 and each block 28 in the adjoining block row 22 are shifted approximately half a pitch in the circumferential direction of the tire, and also the blocks between the the adjoining block rows 22 and 36 through the circumferential main groove 24 are shifted in the circumferential direction of the tire. In the illustrated embodiment, two sipes 44 are arranged in each block 40 of the block row 42 located at the outer side of the ground contacting portion 12 in the widthwise direction of the tire, whereby the contacting property of the blocks 40 against the ground is improved to reduce the dragging of the blocks against the road surface and hence the occurrence of uneven wear at this block row can be prevented.

On the other hand, a platform 46 is arranged in the groove defining the block row 14 located at the central region of the ground contacting portion 12, which is subjected to large traction force and braking force during the running of the tire, and the adjoining block row 22 of the blocks shifted from the blocks of the block row 14 in the circumferential direction of the tire, i.e. the circumferential groove 16 extending zigzag in the circumferential direction of the tire in the illustrated embodiment so as to slantly extend between the opposed blocks 20 and 28 with respect to the equatorial plane S of the tire. That is, the concentration of stress in the top of the platform can be made small by slantly extending the platform with respect to the equatorial plane.

Furthermore, the blocks of the adjoining block rows in the widthwise direction of the tire are shifted from each other between the block rows in the circumferential direction of the tire to increase the edge component with respect to the circumferential direction, so that the slipping resistance of the tire on snow road can be improved. Also, the stepping-in and kicking-out timings of the blocks adjacent to each other in the widthwise direction of the tire are different during the running of the tire, so that the edge of the sipe and any block portion simultaneously come into contact with the ground and hence the blocks of the mutually adjoining block rows can make the opening of the sipe 44 small as compared with the case that the blocks of the adjoining block rows are substantially aligned straight in the widthwise direction.

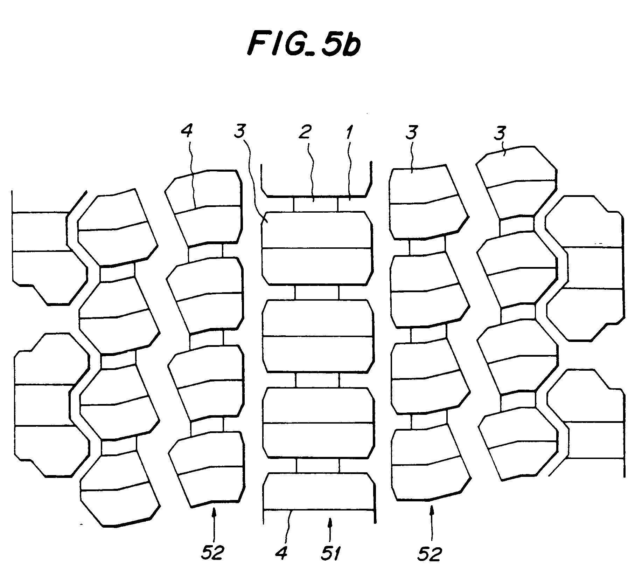

This tendency is common in tires having substantially the same tread pattern as in the present invention except that the platform is arranged between the adjoining blocks in the circumferential direction of the tire or the blocks of the adjoining block rows are aligned straight in the widthwise direction. For example, in the conventional tire as shown in Fig. 5a, three block rows 51, 52, 52 are arranged in a central region of the ground contacting portion so as to be separate from each other in the widthwise direction, in which the block row 51 consists of plural blocks 3 having an approximately octagonal shape and each of the block rows 52, 52 consists of plural blocks 3 having an approximately nonagonal shape and these blocks are aligned straight in the widthwise direction of the tire and each of these blocks is divided into two parts by a sipe 4. Furthermore, the adjoining blocks of each block row in the circumferential direction are reinforced by a platform 2 arranged in the lateral groove 1. On the other hand, a reference tire as shown in Fig. 5b has the same block pattern as in the conventional tire except that the blocks of the adjoining block rows in the widthwise direction are shifted from each other in the circumferential direction of the tire. The maximum opening angle of the sipe during the running of the tire and the length of cracking produced in the bottom of the sipe at the block existing in the central region of the ground contacting portion after actual running over a distance of 20,000km were measured with these tires and represented by an index value on the basis that the conventional tire shown in Fig. 5a was 100. In the reference tire of Fig. 5b, the index of the maximum opening angle of the sipe was 82 and the index of cracking length in the sipe was 77. As seen from these facts, the occurrence of the cracking in the bottom of the sipe can be suppressed when the blocks of the adjoining block rows are shifted from each other in the circumferential direction of the tire as compared with the case that the blocks of the adjoining block rows are aligned straight in the widthwise direction of the tire. On the contrary, in the tire of Fig. 1 according to the invention, the index of the maximum opening angle of the sipe was 60 and the index of the cracking length in the sipe was 42, from which it is apparent that the performances are improved by connecting the adjoining block portions separated from each other in the widthwise direction to each other through the platform slantly extending in the circumferential groove with respect to the equatorial plane S. Moreover, the smaller the index value, the better the performance.

As schematically shown in Fig. 2, according to the invention, it is preferable that the depth H of the circumferential groove 16 is 60-85% of the depth Ho of the circumferential main groove 24 and the depth Hp of the platform 46 satisfies a relation of $0.45Ho \leq Hp \leq 0.75Ho$.

When the depth Hp of the platform is less than $0.45Ho$ of the depth of the circumferential main groove, the platform can not sufficiently restrain the motion of the block in the circumferential direction of the tire and stress concentrates in the platform, so that cracking is apt to be caused and the tire life is degraded. On the other hand, when the depth Hp exceeds $0.75Ho$, the rigidity of the platform is too high, so that the insides of the grooves defining the block become clogged with snow and hence the performances on snow roads are largely degraded.

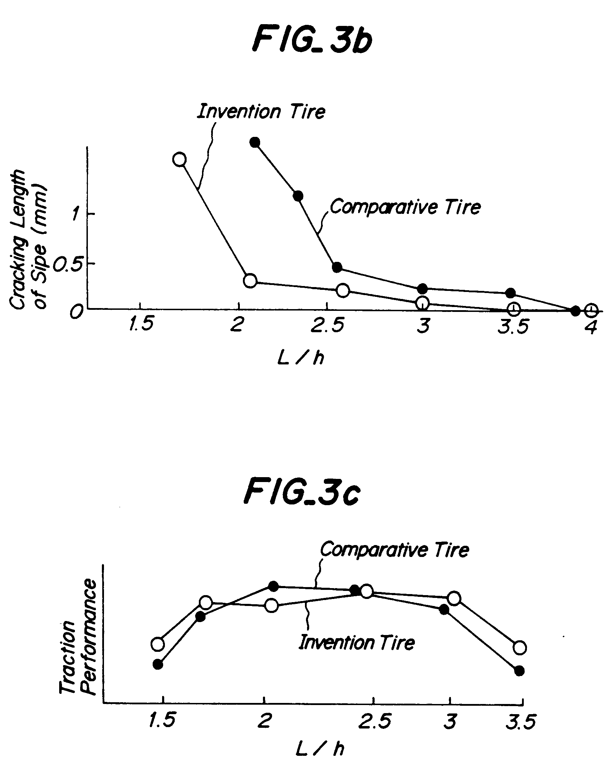

In another preferred embodiment, as schematically shown in Fig. 3a, the length L of each block in the circumferential direction of the tire and the depth h (mm) of the sipe are selected so as to satisfy a relation of $2.1h \leq L \leq 3.0h$ provided that $5 \leq h \leq 15$.

As shown in Figs. 3b and 3c, when the ratio of block length to sipe depth (L/h) is less than 2.1, cracking is apt to be created in the bottom of the sipe dividing the block and also the traction performance on snow road is degraded, while when it exceeds 3.0, the occurrence of cracking at the sipe bottom is largely reduced, but the traction performance on snow road is still degraded. On the other hand, when h is less than 5mm, the sipe is lost by wearing only during running in the winter season, while when h exceeds 15mm, the rigidity of the block lowers and hence the block is worn down in the traction to degrade the traction performance on snow road. Moreover, when the block length is made long in order to prevent the latter phenomenon, the block itself is too large and hence the traction performance on snow road is degraded.

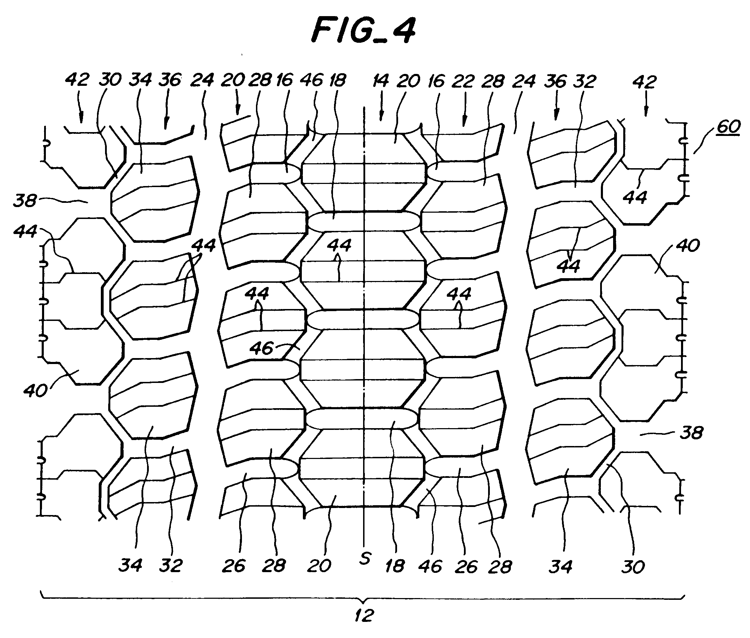

In Fig. 4 is shown another embodiment of a tread pattern in a pneumatic tire 60 according to the invention. That is, this tread pattern is a modified embodiment of Fig. 1 in which each of the blocks 20, 28, 34 is divided into three parts in the circumferential direction of the tire by two sipes extending substantially in the widthwise direction of the tire.

In any case, one or two sipes are used for dividing the block according to the invention. If three or more sipes are used, cracking is apt to be created because the length of the divided block portion becomes too small.

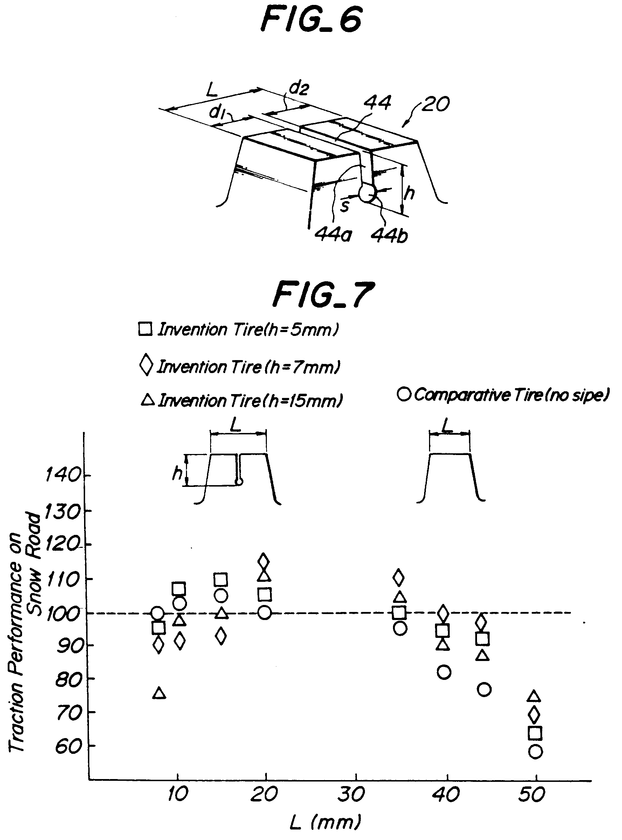

A block 20 is schematically shown in Fig. 6. The block 20 has a length L (mm) in the circumferential direction of the tire satisfying 10.5≦L≦45 and is divided substantially into two parts by a sipe 44 in the circumferential direction. The sipe 44 is comprised of a notch portion 44a and an enlarged bottom portion 44b having a width wider than that of the notch portion. Moreover, the sipe 44 has a width of not more than 1mm, preferably not more than 0.6mm.

The selection of the length L of the block in the circumferential direction from the above range is to ensure good traction performance on snow road and is based on experimental results shown in Fig. 7. In this experiment, there were first provided four test tires having a tire size of 10.00 R20 and a so-called radial carcass structure, three of which tires being a tire according to the invention wherein five block rows each consisting of a plurality of blocks provided with a sipe extending substantially in the widthwise direction and aligned in the circumferential direction are separated from each other in the widthwise direction of the tire, and the other tire being a comparative tire having the same tread pattern as in the invention tire except for the absence of the sipes. Each of these tires was mounted onto a front wheel of a four-wheeled vehicle having a constant capacity under a normal internal pressure and run on a snow road, whereby the influence of the length of the block in the circumferential direction upon the traction performance on snow road was evaluated by a feeling test.

As seen from Fig. 7, all of the invention tires having sipe depths of 5mm, 7mm and 15mm and the comparative tire having no sipes show a tendency of largely degrading the traction performance on snow road when the circumferential length L of the block exceeds 45mm. On the other hand, when the circumferential length L is about 10.5mm, the traction performances on snow road of these tires are approximately equal to each other, but when the circumferential length L is less than 10.5mm, these tires show a tendency of degrading the traction performance on snow road. Furthermore, it has been confirmed that when the circumferential length L in the block including the sipe therein is within a range of 10.5-45mm, preferably 15-40mm, more particularly 20-35mm, the traction performance on snow road can be more improved as compared with the case of using the block having no sipe. Moreover, the depth h of the sipe is preferably in a range of 5-15mm, more preferably 7-15mm as seen from Fig. 7.

When the circumferential length L exceeds 45mm, the ground contacting pressure lowers with the increase of the circumferential length of the block and hence it is difficult to obtain the edge effect of the block. On the other hand, when the circumferential length L is less than 10.5mm, the rigidity of the block is too small and hence it is also difficult to obtain the edge effect of the block. This is apparent from the fact that the block having no sipe has high traction performance on snow road as compared with the block having the sipe.

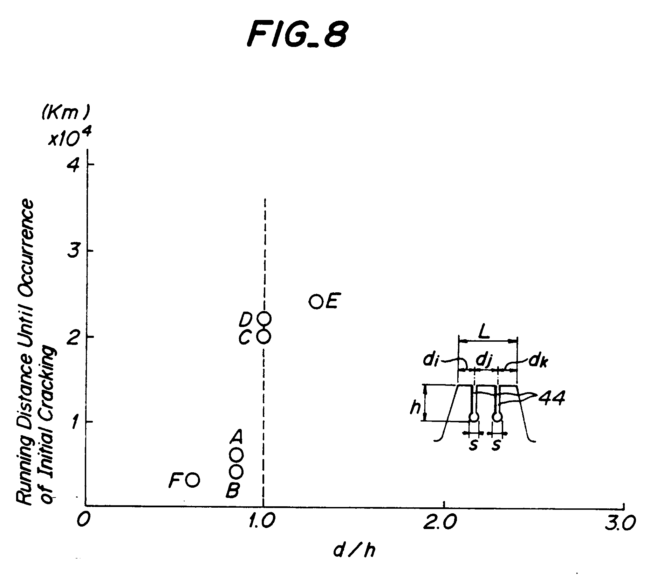

Then, the ground contacting portion of the tire having a tire size of 10.00 R20 and a usual radial carcass structure was equally divided into six sections in the circumferential direction of the tire. Each of these sections was provided with any one of blocks A-F having different values of number n of sipes 44, depth h (mm) of sipe, minimum length d (mm) of block portion divided by the sipe, length L (mm) of block in the circumferential direction of the tire and ratio of minimum length d of block portion to depth h of sipe. Two pairs of such tires were mounted onto left and right driving shafts of a four-wheeled vehicle having a capacity of 10 tons under a normal internal pressure and run on a road, whereby a relation between the ratio d/h and running distance until cracking occurs at the bottom of the sipe was measured to obtain results as shown in Fig. 8. Moreover, the number n of sipes, depth h of sipe, minimum length d of block portion divided by the sipe, circumferential length L of block and ratio d/h in each of the blocks A-F are shown in Table 1. In this case, the length s of the enlarged portion at the bottom of the sipe in the circumferential direction of the tire was constant (1.5mm).

Table 1

|   | n | h (mm) | d (mm) | L (mm) | d/h |
|---|---|--------|--------|--------|-----|
| A | 2 | 7 | 6 | 18 | 0.85 |
| B | 2 | 15 | 12.8 | 38.4 | 0.85 |
| C | 2 | 10 | 10 | 30 | 1.0 |
| D | 1 | 10 | 10 | 30 | 1.0 |
| E | 3 | 7 | 9.1 | 36.4 | 1.3 |
| F | 1 | 10 | 6 | 12 | 0.6 |

As seen from Fig. 8, the running distance until cracking occurs at the bottom of the sipe 44 can be increased by restricting the ratio d/h to not less than 1.0 irrespective of the number of the sipes.

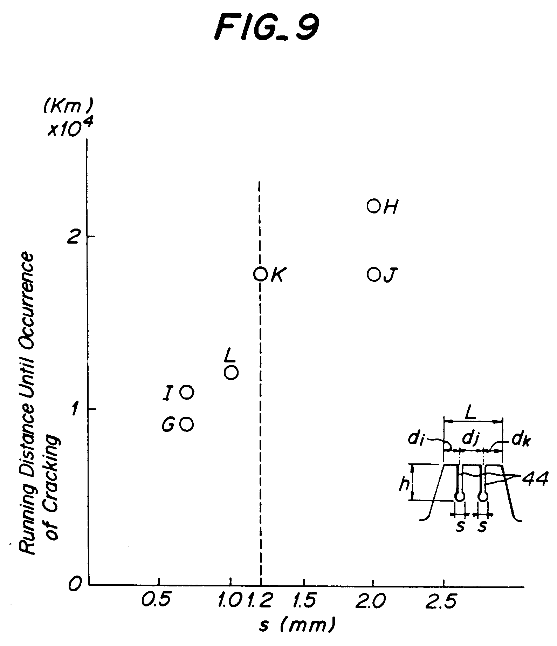

On the other hand, a relation between the circumferential length s of the enlarged portion at the bottom of the sipe and the running distance until cracking occurs in the bottom of the sipe is shown in Fig. 9. In this case, the ground contacting portion of the tire having a tire size of 10.00 R20 and the usual radial carcass structure was equally divided into six sections in the circumferential direction of the tire. Each of these sections was provided with any one of blocks G-L having different values of number n of sipes 44, depth h (mm) of sipe, minimum length d (mm) of block portion divided by the sipe and circumferential length s of enlarged portion at bottom of sipe. Two pairs of such tires were mounted onto left and right driving shafts of a four-wheeled vehicle having a capacity of 10 tons under a normal internal pressure and run on a road, whereby a relation between the circumferential length of the enlarged portion of the sipe bottom and running distance until cracking occurs at the bottom of the sipe was measured to obtain results as shown in Fig. 9. Moreover, the number n of sipes, depth h of sipe, minimum length d of block portion divided by the sipe and circumferential length s of the enlarged portion at sipe bottom in each of the blocks G-L are shown in Table 2. In this case, the sipe depth h was within a range of 5-15 in connection with Fig. 7.

Table 2

|   | s (mm) | n | h (mm) | d (mm) |
|---|--------|---|--------|--------|
| G | 0.7 | 1 | 10 | 12 |
| H | 2.0 | 2 | 10 | 12 |
| I | 0.7 | 2 | 7 | 10 |
| J | 2.0 | 1 | 15 | 12 |
| K | 1.2 | 1 | 10 | 12 |
| L | 1.0 | 1 | 10 | 12 |

As seen from Fig. 9, the running distance until cracking occurs in the bottom of the sipe can be increased by restricting the circumferential length s of the enlarged portion at the sipe bottom to not less than 1.2mm or by adopting the blocks H, J and K, while when the circumferential length s is less than 1.2mm, cracking is caused at the sipe bottom in a relatively short time. Therefore, the circumferential length s (mm) of the enlarged portion at the bottom of the sipe is preferably s≧1.2.

According to the invention, blocks capable of improving the tire life without damaging the running performances on snow roads are obtained when the circumferential length L (mm) of the block arranged in the ground contacting portion of the tire is preferably 10.5≦L≦45, the depth h (mm) of the sipe including the enlarged portion at its bottom is preferably 5≦h≦15, and the minimum length d (mm) of the block portion divided by the sipe in the circumferential direction and the circumferential length s (mm) of the enlarged

7

portion at the sipe bottom preferably satisfy d/h≧1.0 and s≧1.2.

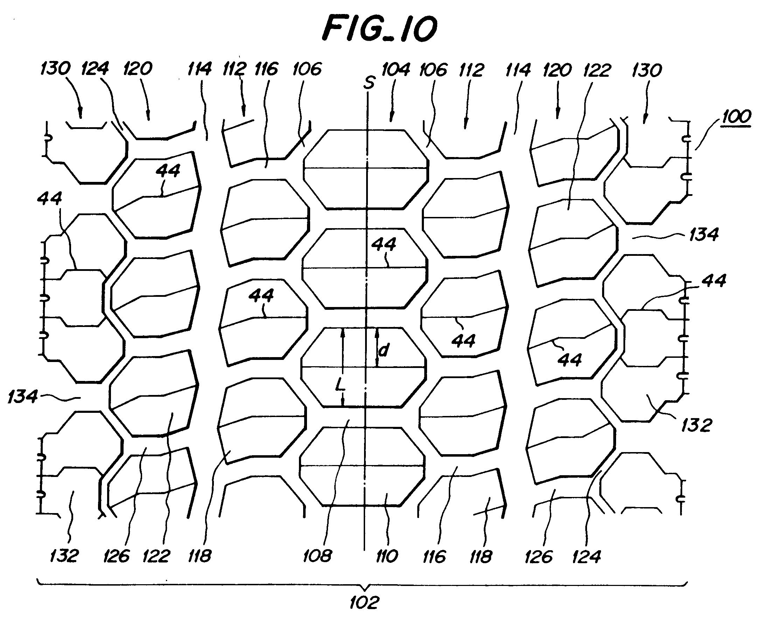

An embodiment of a tread pattern having the above blocks in a pneumatic tire according to the invention is shown in Fig. 10. In a ground contacting portion 102 of this tire 100, seven block rows each consisting of a plurality of blocks separated from each other in the circumferential direction are arranged so as to be separate from each other in the widthwise direction of the tire.

A block row 104 located on the equatorial plane S is comprised of a plurality of blocks 110 having a flat octagonal shape which are defined by two circumferential grooves 106 separated from each other in the widthwise direction and extending zigzag in the circumferential direction and lateral grooves 108 extending between the circumferential grooves in the widthwise direction and separated from each other in the circumferential direction of the tire. Each of other block rows 112 sandwiching the block row 104 is comprised of a plurality of blocks 118 having a nonagonal shape which are defined by the circumferential groove 106, a circumferential main groove 114 arranged outside the groove 106 in the widthwise direction and extending continuously in the circumferential direction and lateral grooves extending substantially in the widthwise direction and slightly slanting at the side of the circumferential main groove and separated from each other in the circumferential direction of the tire. Moreover, the width of the circumferential main groove 114 is wider than that of the circumferential groove 106 for ensuring good drainage property.

In a region of the ground contacting portion outside the circumferential main groove 114 is arranged a block row 120 comprised of a plurality of blocks 122 having a nonagonal shape which are defined by the circumferential main groove 114, a circumferential groove 124 having a width narrower than that of the circumferential groove 106 and extending zigzag in the circumferential direction and lateral grooves extending substantially between the circumferential main groove 114 and the circumferential groove 124 and slightly slanting at the side of the circumferential main groove and separated from each other in the circumferential direction of the tire. The slant portion of the lateral groove 116 defining the block 118 has an inclination angle approximately equal to that of the lateral groove 126 defining the block 122, and the tapered portions of the blocks 118 and 122 having substantially the same shape are arranged so as to oppose to each other in the widthwise direction of the tire. Moreover, a block row 130 comprised of a plurality of blocks 132, which are defined by the circumferential groove 124 and wide width lateral grooves 134 extending in the widthwise direction and separated from each other in the circumferential direction of the tire, is arranged in an outermost region of the ground contacting portion 102 of the tire.

The blocks 110 of the block row 104 are shifted from the blocks 118 of the opposed block rows 112 which sandwich the block row 104 in the circumferential direction of the tire, and also the blocks 122 of the block row 120 are shifted from the blocks 118 of the block row 112 in the circumferential direction of the tire.

In these block rows, each of the blocks is divided into two parts in the circumferential direction of the tire by a sipe 44. Such a sipe 44 has a depth h of 5-15mm and includes an enlarged portion at its bottom. Furthermore, the circumferential length L of each block in these block rows is 10.5-45mm, and the ratio of minimum circumferential length d of block portion divided by the sipe to the sipe depth h is not less than 1.0, and the circumferential length s of the enlarged portion at the sipe bottom is not less than 1.2mm.

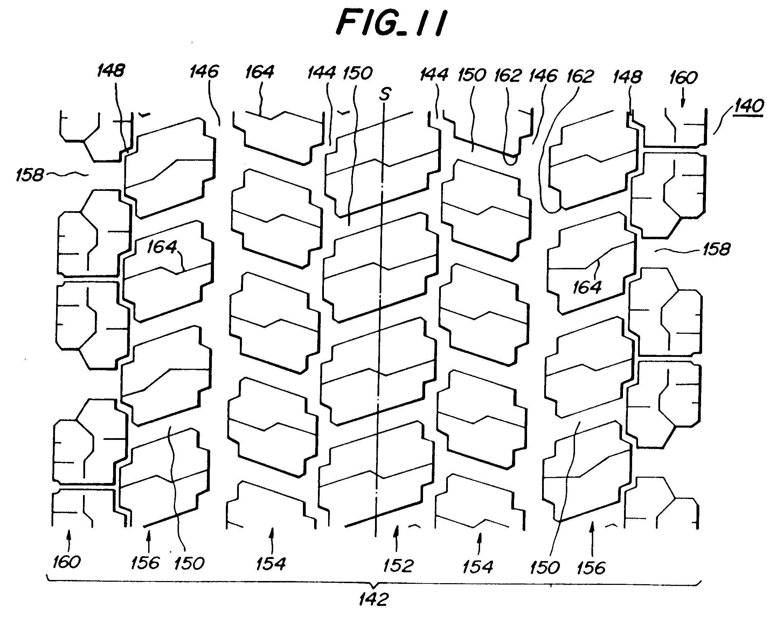

Furthermore, a tread portion 142 of another pneumatic tire 140 according to the invention is shown in Fig. 11. This tire 140 comprises block rows 152, 154, 156 which are defined by six circumferential grooves 144, 146 and 148 each extending continuously in the circumferential direction of the tire and zigzag in the widthwise direction of the tire, and lateral grooves 150 separated from each other in the circumferential direction of the tire and slantly extending in the widthwise direction of the tire wherein the slanting directions of the respective lateral grooves are inclined with respect to each other. Also, each of the outer regions of the tread portion 142 in the widthwise direction of the tire is provided with a block row 160 comprised of a plurality of blocks which are defined by the circumferential groove 68 and width-wide lateral grooves 158 extending substantially in the widthwise direction and separated from each other in the circumferential direction of the tire.

Each of the blocks constituting each of the block rows 152, 154 and 156 has a substantially dodecagonal shape in which a corner point of connecting a pair of parallel sides extending in the widthwise direction at a certain inclination angle with respect to the equatorial plane S to a pair of parallel sides separated from each other in the widthwise direction and extending in the circumferential direction is a notch portion. Moreover, a corner portion 162 of the side inclined with respect to the equatorial plane S in the block firstly contacting with the ground during the running is slightly cut.

Furthermore, each of the blocks is provided with a sipe 164 substantially extending in the widthwise direction at a slight inclination angle with respect to the equatorial plane S but having bending points as shown at a position corresponding to the central portion of the block in the widthwise direction. The sipe 164 is provided at its bottom with an enlarged portion having a substantially arc shape in section in the circumferential direction of the tire. The tire of the illustrated embodiment satisfies the conditions that the depth h of the sipe is 5-15mm, the circumferential length L of the block is 10.5-45mm, the ratio of minimum circumferential length d of block portion to the sipe depth h is not less than 1.0 and the circumferential length s of the enlarged portion at the sipe bottom is not less than 1.2mm.

According to another embodiment of the invention, the platform as defined in Fig. 1 is applied to the tread pattern as shown in Figs. 10 and 11, whereby the effect of improving the running performances on snow and ice roads and non-paved roads can be more developed.

The following examples are given in illustration of the invention and are not intended as limitations thereof.

Example 1

There were provided six test tires having a tire size of 10.00 R20 as mentioned later and then the tire life and the running performance on snow road were measured with respect to these test tires in the following method to obtain results as shown in Table 3.

◎ TEST TIRES

Invention tire 1:

This tire had a tread pattern shown in Fig. 1, in which the circumferential groove had a depth (Ho) of 20mm and a width of 11mm, and the circumferential groove had a depth (H) of 15mm and a width of 5mm, and the lateral groove had a depth of 15mm and a width of 6mm, and the platform had a depth (Hp) of 10mm, and the length (L) of each block in the circumferential direction was 26mm, and the sipe had a width of 0.6mm and a depth (h) of 10mm.

Invention tire 2:

This tire had the same structure as in the invention tire 1 except that its tread pattern was as shown in Fig. 4 in which each block was divided by two sipes each having a depth (h) of 8mm.

Invention tire 5:

This tire had the same structure as in the invention tire 1 except that the sipe had an enlarged portion having a circumferential length (s) of 2mm at its bottom (d = 12.7mm, h = 10mm, d/h = 1.3)

Invention tire 6:

This tire had the same structure as in the invention tire 2 except that the sipe had an enlarged portion having a circumferential length (s) of 2mm at its bottom (d = 8.3mm, h = 8mm, d/h = 1.0)

Comparative tire 1:

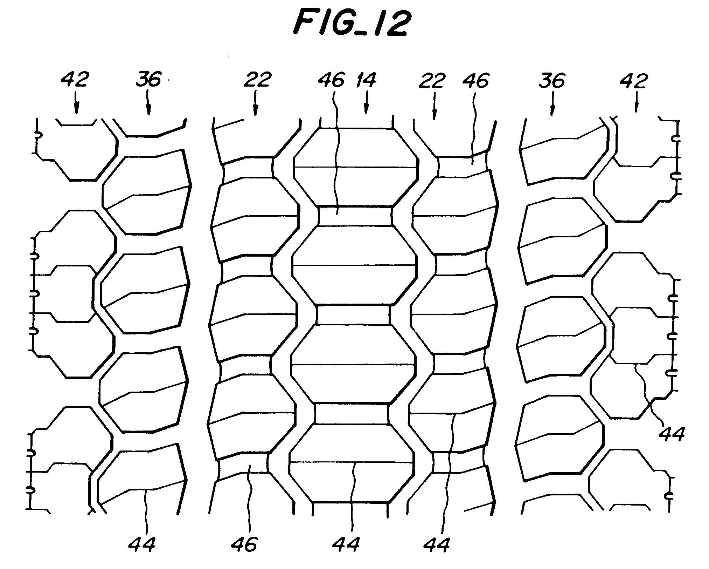

This tire had the same structure as in the invention tire 1 except that its tread pattern was as shown in Fig. 12 in which the blocks separated from each other in the circumferential direction in each of the block rows 14, 22 were connected to each other through a platform 46 in the circumferential direction of the tire.

◎ TEST METHOD

Tire life:

Each of the test tires was mounted on a vehicle of 8 tons in capacity and actually run over a distance of 20,000km. Thereafter, the presence or absence of the cracking at the sipe bottom and platform in each block at the central region of the ground contacting portion and the size thereof were visually observed and the maximum opening angle of the sipe was measured to obtain results as shown in Table 3 by an index on the basis that the comparative tire 1 was 100. The smaller the index value, the better the tire life.

Running performance on snow road:

A feeling test was made by actually running the test tire on a snow road. The performance was evaluated by an index on the basis that the comparative tire 2 was 100. The larger the index value, the better the performance.

◎ TEST RESULTS

The measured results are shown in Table 3.

Table 3

|  |  | Invention tire 1 | Invention tire 2 | Invention tire 5 | Invention tire 6 | Comparative tire 1 |
|---|---|---|---|---|---|---|
| Tire life | Sipe opening angle | 42 | 45 | none | none | 100 |
|  | Cracking of platform | none | none | none | none | 100 |
|  | Cracking at sipe bottom | 60 | 62 | 65 | 67 | 100 |
| Running performance on snow |  | 100 | 115 | 100 | 115 | 100 |

As seen from Table 3, in the tires according to the invention, the tire life can be more improved while maintaining the performances on snow roads by arranging the platforms in the circumferential groove as defined in the invention.

Example 2

There were provided three test tires having a tire size of 10.00 R20 as mentioned below, and then the tire life and the traction performance on snow road were measured in the following test method to obtain results as shown in Table 4.

◎ TEST TIRES

Invention tire 3:

This tire had a tread pattern shown in Fig. 10 in which the circumferential length (L) of block was 26mm, and the sipe had a width of 0.6mm, a depth (h) of 11mm and a circumferential length (s) of enlarged portion at its bottom of 2mm, and a minimum circumferential length d of block portion of 12.7mm and d/h was 1.2.

Invention tire 4:

This tire had a tread pattern shown in Fig. 11 in which the circumferential length (L) of block was 29mm, and the sipe had a width of 0.6mm, a depth (h) of 11mm and a circumferential length (s) of enlarged portion at its bottom of 2mm, and a minimum circumferential length d of block portion of 14.2mm and d/h was 1.3.

Comparative tire 2:

This tire had a tread pattern shown in Fig. 10 except that the bottom of the sipe dividing the block was not enlarged but was U-shape.

◎ TEST METHOD

Each of these test tires was mounted on a driving shaft of a vehicle of 10 tons in capacity and run under the following conditions for a feeling test. That is, the tire life was measured by running the tire on a dry road until cracking occurred at the bottom of the sipe, while the traction performance on snow road was

EP 0 468 815 B1

measured by running on a snow road surface at a snow temperature of -2°C. The feeling test results were evaluated by an index on the basis that the comparative tire 2 was 100. The larger the index value, the better the property.

◎ TEST RESULTS

The measured results are shown in Table 4.

Table 4

| | Running performance | Traction performance on snow road |
|---|---|---|
| Invention tire 3 | no cracking | 100 |
| Invention tire 4 | no cracking | 105 |
| Comparative tire 2 | cracking occurred at 18000 km | 100 |

As seen from Table 4, the tire life can be improved without damaging the traction performance on snow road by using the block pattern of the tire according to the invention.

Moreover, various modifications may be made within the scope of the invention. For example, the groove extending in the circumferential direction of the tire may be extended substantially straight, or a sipe extending substantially in the circumferential direction of the tire may be added to the block.

As mentioned above, according to the invention, the running performances on snow and ice roads and the tire life which have never been simultaneously attained in the conventional technique can be achieved.

**Claims**

1. A pneumatic tire (10) having a block pattern in which at least three block rows (14,22) each comprised of a plurality of blocks (20,28) separated from each other in the circumferential direction of the tire are arranged in a tread portion of the tire so as to be separate from each other in the widthwise direction of the tire,
   characterized in that said blocks (20,28) of the mutually adjoining block rows (14,22) are shifted in the circumferential direction of the tire, and each of these blocks is divided by at least one sipe (44), and a block portion of each block (20) in a central block row (14) among these block rows divided by a sipe is connected to a block portion of each block (28) in the adjoining block row (22) through a platform (46) arranged in a groove (16) separating these block rows (20,22) from each other in the widthwise direction of the tire, provided that the depth of the platform (46) is shallower than the depth of the groove (16).

2. A pneumatic tire as claimed in claim 1,
   characterized in that each block (20,28) in all of said block rows (14,22) is divided by at least one sipe (44) substantially extending in the widthwise direction of the tire and having an enlarged bottom portion (44b), and said block has a length L (mm) in the circumferential direction of the tire satisfying $10.5 \leq L \leq 45$, and said sipe has a depth h (mm) of $5 \leq h \leq 15$ and satisfies the following relations:

$$d/h \geq 1.0 \text{ and } s \geq 1.2$$

   wherein d is the shortest distance (mm) among a distance between an edge of the block extending in the widthwise direction of the tire and a sipe adjacent to such an edge and a distance between the mutually adjoining sipes and s is the length (mm) of the enlarged bottom portion (44b) of the sipe in the circumferential direction of the tire.

3. A pneumatic tire as claimed in claim 1 or 2, characterized in that the platform (46) satisfies the following relation:

$$0.45Ho \leq Hp \leq 0.75Ho$$

11

wherein Ho is the depth of a groove (24) separating the block rows (22,36) from each other in the widthwise direction of the tire and having no platform, and Hp is the depth of the platform (46).

4. A pneumatic tire as claimed in claim 3, characterized in that the depth H of the groove (16) having the platform (46) therein and the depth Ho of the groove (24) having no platform satisfy a relation of $0.60 \leq H/Ho \leq 0.85$.

5. A pneumatic tire as claimed in any of claims 1 to 4, characterized in that the blocks (20,28) of the mutually adjoining block rows (14,22) are shifted at about 1/2 pitch in the circumferential direction of the tire.

6. A pneumatic tire as claimed in any of claims 1 to 5, characterized in that the platform (46) is slantly extended with respect to the equatorial plane (S) of the tire.

7. A pneumatic tire as claimed in any of claims 1 to 6, characterized in that the sipe (44) satisfies the following relation:

$$2.1h \leq L \leq 3.0h$$

wherein h is the depth of the sipe and L is the length of the block in the circumferential direction of the tire.

8. A pneumatic tire as claimed in any of claims 1 to 7, characterized in that the sipe (44) has a depth of 5-15mm.

9. A pneumatic tire as claimed in any of claims 1 to 8, characterized in that the sipe (44) has a width of not more than 1mm.

10. A pneumatic tire as claimed in claim 9, characterized in that the width of the sipe is not more than 0.6mm.

11. A pneumatic tire as claimed in any of claims 1 to 10, characterized in that the length L of the block in the circumferential direction of the tire is within a range of 15-40mm.

12. A pneumatic tire as claimed in claim 11, characterized in that the length L is within a range of 20-35mm.

13. A pneumatic tire as claimed in any of claims 1 to 12, characterized in that the sipe (44) has bending points in the widthwise direction of the tire.

## Patentansprüche

1. Luftreifen (10), der ein Blockmuster hat, bei dem mindestens drei Blockreihen (14, 22), von denen jede aus einer Vielzahl von in der Umfangsrichtung des Reifens voneinander getrennten Blöcken (20, 28) besteht, in einem Laufflächenbereich des Reifens so angeordnet sind, daß sie in der Breitenrichtung des Reifens voneinander getrennt sind, dadurch gekennzeichnet, daß die Blöcke (20, 28) der aneinandergrenzenden Blockreihen (14, 22) in der Umfangsrichtung des Reifens versetzt sind, und jeder dieser Blöcke durch mindestens einen Einschnitt (44) geteilt ist, und ein Blockbereich jedes Blocks (20) in der mittleren Blockreihe (14) dieser durch einen Einschnitt geteilten Blockreihen über eine Plattform (46) mit einem Blockbereich jedes Blocks (28) in der angrenzenden Blockreihe (22) verbunden ist, wobei die Plattform (46) in einer Rille (16) angeordnet ist, die diese Blockreihen (20, 22) in der Breitenrichtung des Reifens voneinander trennt, sofern die Tiefe der Plattform (46) geringer als die Tiefe der Rille (16) ist.

2. Luftreifen gemäß Anspruch 1, dadurch gekennzeichnet, daß jeder Block (20, 28) bei allen Blockreihen (14, 22) durch mindestens einen Einschnitt (44) geteilt ist, der sich im wesentlichen in der Breitenrichtung des Reifens erstreckt und einen verbreiterten Bodenbereich (44b) hat, und der Block eine Länge L (mm) in der Umfangsrichtung des Reifens mit $10,5 \leq L \leq 45$ hat, und der Einschnitt eine Tiefe h (mm) mit 5 ≤ h ≤ 15 hat, und die folgenden Beziehungen erfüllt werden:

$$d/h ≥ 1,0 \text{ und } s ≥ 1,2$$

wobei d der kürzeste Abstand (mm) unter dem Abstand zwischen einem sich in der Breitenrichtung des Reifens erstreckenden Rand des Blocks und dem an diesen Rand angrenzenden Einschnitt, und dem Abstand zwischen den aneinandergrenzenden Einschnitten ist, und s die Länge (mm) des verbreiterten Bodenbereichs (44b) des Einschnitts in der Umfangsrichtung des Reifens ist.

3. Luftreifen gemäß Anspruch 1 oder 2, dadurch gekennzeichnet, daß die Plattform (46) die folgende Beziehung erfüllt:

$$0,45 \text{ Ho} ≤ \text{Hp} ≤ 0,75 \text{ Ho}$$

wobei Ho die Tiefe einer Rille (24) ist, die die Blockreihen (22, 36) in der Breitenrichtung des Reifens voneinander trennt und keine Plattform hat, und Hp die Tiefe der Plattform (46) ist.

4. Luftreifen gemäß Anspruch 3, dadurch gekennzeichnet, daß die Tiefe H der Rille (16), die die Plattform (46) hat, und die Tiefe Ho der Rille (24), die keine Plattform hat, die Beziehung $0,60 ≤ H/Ho ≤ 0,85$ erfüllen.

5. Luftreifen gemäß einem der Ansprüche 1 bis 4, dadurch gekennzeichnet, daß die Blöcke (20, 28) der aneinandergrenzenden Blockreihen (14, 22) um ungefähr eine halbe Teilungslänge in der Umfangsrichtung des Reifens versetzt sind.

6. Luftreifen gemäß einem der Ansprüche 1 bis 5, dadurch gekennzeichnet, daß sich die Plattform (46) schräg zu der Äquatorebene (S) des Reifens erstreckt.

7. Luftreifen gemäß einem der Ansprüche 1 bis 6, dadurch gekennzeichnet, daß der Einschnitt (44) die folgende Beziehung erfüllt:

$$2,1h ≤ L ≤ 3,0h$$

wobei h die Tiefe des Einschnitts, und L die Länge des Blocks in der Umfangsrichtung des Reifens ist.

8. Luftreifen gemäß einem der Ansprüche 1 bis 7, dadurch gekennzeichnet, daß der Einschnitt (44) eine Tiefe von 5-15 mm hat.

9. Luftreifen gemäß einem der Ansprüche 1 bis 8, dadurch gekennzeichnet, daß der Einschnitt (44) eine Breite von nicht mehr als 1 mm hat.

10. Luftreifen gemäß Anspruch 9, dadurch gekennzeichnet, daß die Breite des Einschnitts nicht größer als 0,6 mm ist.

11. Luftreifen gemäß einem der Ansprüche 1 bis 10, dadurch gekennzeichnet, daß die Länge L des Blocks in der Umfangsrichtung des Reifens innerhalb des Bereichs von 15-40 mm liegt.

12. Luftreifen gemäß Anspruch 11, dadurch gekennzeichnet, daß die Länge L innerhalb eines Bereichs von 20-35 mm liegt.

13. Luftreifen gemäß einem der Ansprüche 1 bis 12, dadurch gekennzeichnet, daß der Einschnitt (44) in der Breitenrichtung des Reifens Knickpunkte hat.

**Revendications**

1. Pneumatique (10) ayant une sculpture à blocs dans laquelle au moins trois rangées de blocs (14, 22) composée chacune de plusieurs blocs (20, 28) séparés les uns des autres dans la direction circonférentielle du pneumatique, sont agencées dans une partie de la bande de roulement du pneumatique, de sorte à être séparées les unes des autres dans la direction de la largeur du pneumatique, caractérisé en ce que lesdits blocs (20, 28) des rangées de blocs mutuellement adjacentes (14, 22) sont décalés dans la direction circonférentielle du pneumatique, et en ce que chacun des ces blocs est divisé par au moins une lamelle (44), une partie du bloc de chaque bloc (20) dans une rangée centrale de blocs (14) parmi ces rangées de blocs divisée par une lamelle étant connectée à une partie du bloc de chaque bloc (28) dans la rangée de blocs adjacente (22) par l'intermédiaire d'une plateforme (46) agencée dans une rainure (16) séparant ces rangées de blocs (20, 22) les unes des autres dans la direction de la largeur du pneumatique, étant entendu que la profondeur de la plateforme (46) est inférieure à la profondeur de la rainure (16).

2. Pneumatique selon la revendication 1, caractérisé en ce que chaque bloc (20, 28) dans chacune desdites rangées de blocs (14, 22) est divisé par au moins une lamelle (44) s'étendant pratiquement dans la direction de la largeur du pneumatique et ayant une partie de fond élargie (44b), ledit bloc ayant une longueur L (mm) dans la direction circonférentielle du pneumatique satisfaisant à la relation de $10{,}5 \leq L \leq 45$, ladite lamelle ayant une profondeur h (mm) de $5 \leq h \leq 15$ et satisfaisant aux relations ci-dessous:

$$d/h \geq 1{,}0 \text{ et } s \geq 1{,}2$$

où d représente la distance la plus courte (mm) parmi une distance entre un bord du bloc s'étendant dans la direction de la largeur du pneumatique et une lamelle adjacente à un tel bord et une distance entre les lamelles mutuellement adjacentes, s représentant la longueur (mm) de la partie de fond élargie (44b) de la lamelle dans la direction circonférentielle du pneumatique.

3. Pneumatique selon les revendications 1 ou 2, caractérisé en ce que la plateforme (46) satisfait à la relation ci-dessous:

$$0{,}45 \text{ Ho} \leq \text{Hp} \leq 0{,}75 \text{ Ho}$$

où Ho représente la profondeur d'une rainure (24) séparant les rangées de blocs (22, 36) les unes des autres dans la direction de la largeur du pneumatique et ne comportant pas de plateforme, Hp représentant la profondeur de la plateforme (46).

4. Pneumatique selon la revendication 3, caractérisé en ce que la profondeur H de la rainure (16) comportant la plateforme (46) et la profondeur Ho de la rainure (24) ne comportant pas de plateforme satisfont à une relation de $0{,}60 \leq H/Ho \leq 0{,}85$.

5. Pneumatique selon l'une quelconque des revendications 1 à 4, caractérisé en ce que les blocs (20, 28) des rangées de blocs mutuellement adjacentes (14, 22) sont décalés d'environ 1/2 pas dans la direction circonférentielle du pneumatique.

6. Pneumatique selon l'une quelconque des revendications 1 à 5, caractérisé en ce que la plateforme (46) s'étend obliquement par rapport au plan équatorial (S) du pneumatique.

7. Pneumatique selon l'une quelconque des revendications 1 à 6, caractérisé en ce que la lamelle (44) satisfait à la relation ci-dessous:

$$2{,}1 \text{ h} \leq L \leq 3{,}0 \text{ h}$$

où h représente la profondeur de la lamelle et L la longueur du bloc dans la direction circonférentielle du pneumatique.

8. Pneumatique selon l'une quelconque des revendications 1 à 7, caractérisé en ce que la lamelle (44) a une profondeur de 5 à 15 mm.

9. Pneumatique selon l'une quelconque des revendications 1 à 8, caractérisé en ce que la lamelle (44) a une largeur non supérieure à 1 mm.

14

**10.** Pneumatique selon la revendication 9, caractérisé en ce que la largeur de la lamelle n'est pas supérieure à 0,6 mm.

**11.** Pneumatique selon l'une quelconque des revendications 1 à 10, caractérisé en ce que la longueur L du bloc dans la direction circonférentielle du pneumatique est comprise dans une intervalle allant de 15 à 40 mm.

**12.** Pneumatique selon la revendication 11, caractérisé en ce que la longueur L est comprise dans un intervalle allant de 20 à 35 mm.

**13.** Pneumatique selon l'une quelconque des revendications 1 à 12, caractérisé en ce que la lamelle (44) comporte des points de flexion dans la direction de la largeur du pneumatique.

FIG_1

## FIG. 2

## FIG. 3a

## FIG. 3b

## FIG. 3c

# FIG_4

EP 0 468 815 B1

# FIG.5a
## PRIOR ART

# FIG.5b

# FIG_6

# FIG_7

☐ Invention Tire(h=5mm)

◇ Invention Tire (h=7mm)

△ Invention Tire(h=15mm)     ○ Comparative Tire(no sipe)

# FIG_8

# FIG_9

## FIG_10

FIG_11

EP 0 468 815 B1

FIG.12